Europäisches Patentamt

European Patent Office

Office européen des brevets

(19)

(11) Numéro de publication : **0 033 052**
**B1**

(12)

# FASCICULE DE BREVET EUROPÉEN

(45) Date de publication du fascicule du brevet :
28.12.83

(21) Numéro de dépôt : **80401896.8**

(22) Date de dépôt : **31.12.80**

(51) Int. Cl.³ : **G 11 B 7/00**, G 11 B 7/08, G 11 B 7/12

(54) **Dispositif optique d'enregistrement-lecture de supports d'information et système de mémoire optique comportant un tel dispositif.**

(30) Priorité : **23.01.80 FR 8001424**

(43) Date de publication de la demande :
**05.08.81 Bulletin 81/31**

(45) Mention de la délivrance du brevet :
**28.12.83 Bulletin 83/52**

(84) Etats contractants désignés :
**DE GB IT NL SE**

(56) Documents cités :
**EP-A- 0 023 868**
**DE-A- 2 609 980**
**FR-A- 1 466 633**
**FR-A- 2 312 087**
**GB-A- 1 042 318**
**US-A- 3 314 074**
**US-A- 3 381 085**
**US-A- 3 774 172**
**US-A- 3 848 095**
**IBM TECHNICAL DISCLOSURE BULLETIN, vol. 15, no. 2, juillet 1972, ARMONK N.Y. US, R.L. GARWIN: "Optics for beam addressable files", pages 494-495**
**IEEE SPECTRUM, vol. 16, no. 2, février 1979, New York N.Y. US, G.C. KENNEY et al.: "An optical disk replaces 25 mag tapes", pages 33-38**
**Patent Abstracts of Japan. Vol. 1, no. 37, 18 avril 1977 P. 2100E76**

(73) Titulaire : **THOMSON-CSF**
**173, Boulevard Haussmann**
**F-75379 Paris Cedex 08 (FR)**

(72) Inventeur : **Bricot, Claude**
**Thomson-CSF SCPI 173, Bld Haussmann**
**F-75360 Paris Cedex 08 (FR)**
Inventeur : **Le Carvennec, François**
**Thomson-CSF SCPI 173, Bld Haussmann**
**F-75360 Paris Cedex 08 (FR)**
Inventeur : **Lepetit, Pierre**
**Thomson-CSF SCPI 173, Bld Haussmann**
**F-75360 Paris Cedex 08 (FR)**

(74) Mandataire : **Lepercque, Jean et al**
**THOMSON-CSF SCPI 173, Bld Haussmann**
**F-75379 Paris Cedex 08 (FR)**

Jouve, 18, rue St-Denis, 75001 Paris, France

# Dispositif optique d'enregistrement-lecture de supports d'information et système de mémoire optique comportant un tel dispositif

La présente invention se rapporte à un dispositif optique d'enregistrement-lecture de supports d'information et à un système de mémoire optique comportant un tel système.

Les supports d'information enregistrés, lisibles optiquement, actuellement connus, en forme de disques ou de bandes, sont tels que les informations enregistrées se traduisent par des changements locaux d'un paramètre de la couche d'enregistrement : sa hauteur, son indice de réfraction optique, son coefficient d'absorption, de réflexion ou de transmission ; changements susceptibles d'être détectés par voie optique à l'aide de senseurs électro-optiques.

En règle générale les informations sont enregistrées le long d'une piste qui selon la forme du support est soit linéaire (bande), soit en forme de spirale ou d'anneaux concentriques (disque). L'invention se rapporte plus particulièrement aux systèmes emmagasinage de données numériques comprenant des disques qui seuls permettent un accès rapide à une région particulière où est enregistrée une information que l'on désire retrouver.

Un procédé bien connu pour enregistrer des informations consiste à former des micro-cuvettes à la surface du disque de longueur variable dans la direction des pistes, cette longueur variable étant représentative d'une modulation en durée des informations à enregistrer.

La lecture, comme il est bien connu également, peut s'effectuer selon deux approches fondamentales : par réflexion de rayons lumineux focalisés sur une surface réfléchissante (par exemple un dépôt métallique effectué sur la face du disque portant les micro-cuvettes) ou par transmission. Dans les deux approches, les rayons focalisés sont modulés spatialement par les micro-cuvettes représentant les informations enregistrées sur la face lue du disque. Des cellules photo-électriques détectent les signaux réfléchis ou transmis. Les signaux électriques détectés par ces cellules photo-électriques sont alors traités par des circuits électriques appropriés et mis en forme pour restituer l'information enregistrée.

Les rayons lumineux de lecture, et également d'écriture, sont produits, par exemple, par une source laser. La focalisation des rayons est réalisée à l'aide d'une tête d'enregistrement-lecture comprenant une optique de focalisation et maintenue à une distance appropriée de la surface du disque à lire à l'aide d'organes d'asservissement.

Les disques connus, lisibles par voie optique, permettent l'enregistrement d'environ $10^{10}$ éléments binaires d'information, ce pour un disque d'une trentaine de centimètres de diamètre. Ces disques peuvent être mis en œuvre dans les systèmes de mémoires de masses utilisés dans les ensembles de traitement numérique de données. Il va de soi que la capacité précitée est notoirement insuffisante pour une telle utilisation. L'utilisation d'autres types de disques, notamment de disques magnétiques, se heurte aux mêmes difficultés. Aussi de nombreux procédés ont été proposés pour augmenter la capacité individuelle d'un disque.

Il est tout d'abord bien connu d'enregistrer l'information sur les deux faces d'un disque, tous autres paramètres (densité d'enregistrement, etc.) étant maintenus constants.

On peut également jouer sur les paramètres géométriques du disque et notamment augmenter son diamètre, mais cette augmentation du diamètre n'est pas sans inconvénients : augmentation de l'inertie du système, risques d'excentrement entraînant des vibrations, augmentation également de la flèche du disque et des dimensions de l'appareil lecteur-enregistreur dans lequel est placé le disque. Le disque lui-même est plus difficile à réaliser.

L'augmentation de diamètre du disque, si elle permet l'augmentation corrélative de la capacité du disque, est d'autre part une cause importante de l'augmentation du temps d'accès moyen à une zone du disque sur laquelle des informations sont (ou doivent être) emmagasinées. Des procédés complémentaires permettant une plus grande capacité d'enregistrement ont été proposés et à titre d'exemple non limitatif : enregistrement à vitesse linéaire constante (disques asynchrones), et non à vitesse angulaire constante (disques synchrones), ou compression électronique préalable des données à enregistrer. On arrive cependant à une limite de densité d'enregistrement liée à la technologie mise en œuvre, notamment aux matériaux utilisés, à la qualité de l'asservissement des moyens de lecture et à l'apparition de phénomènes parasites. De toute façon, la limite supérieure de la densité d'enregistrement peut être déduite des lois de la diffraction, dans le cas de l'enregistrement par voie optique. En outre, les techniques de compression de l'information ne peuvent être utilisées qu'en périphérie des systèmes de traitement de données : par exemple non limitatif, pour l'acquisition de données analogiques numérisées, telle que l'acquisition de données dans le cadre de la prospection sismique.

Une autre approche, couramment mise en œuvre pour l'enregistrement de données numériques par voie magnétique, est d'utiliser plusieurs disques, organisés en piles et lus simultanément ou séquentiellement par plusieurs têtes magnétiques.

Cette technique est avantageuse dans le cadre de l'enregistrement-lecture par voie magnétique car les têtes magnétiques ont des dimensions et un poids propre faibles. Ce n'est pas le cas des têtes d'enregistrement-lecture optiques qui incorporent, outre des éléments d'optique, un dispositif d'asservissement de position, au moins suivant une direction orthogonale au plan du disque. Ce dispositif comprend des pièces polaires métalliques de poids et d'encombrement non négligeables. La mise en œuvre de cette technique dans le cadre de l'enregistrement optique présente donc de sérieuses difficultés et conduit à des appareils d'enregistrement lourds et encombrants du fait de la multiplication du nombre de têtes ; et complexes du fait de la présence de liaisons électriques véhiculant les signaux de commande du dispositif d'asservissement de position.

Il est connu du brevet US-A-3 3774 172 (SILVERMAN) un dispositif qui permet d'explorer, uniquement de façon alternative, les faces en regard de deux disques consécutifs organisés en pile, ce à l'aide d'un seul et unique objectif et de moyens de séparation d'un faisceau unique de lumière. Les dispositions adoptées impliquent la mise en œuvre de moyens séparés d'exploitation du faisceau après réflexion sur l'un ou l'autre des disques, moyens qui doivent être disposés à proximité immédiate de la face lue, le faisceau réfléchi ne pouvant en retour suivre la voie dudit faisceau unique.

Il est également connu par le brevet US-A-3 314 074 (BECKER) une tête tournante d'enregistrement-lecture à deux objectifs, fixes l'un par rapport à l'autre et qui servent à explorer alternativement la même face d'un même support d'information selon la technique classique mise en œuvre dans les appareils du type magnétoscope ou analogue. La structure adoptée pour la tête d'enregistrement-lecture pour cette application particulière exclut les supports d'informations du type disque.

Pour pallier les inconvénients de l'art connu, le but de l'invention est de proposer un dispositif optique d'enregistrement-lecture simplifié susceptible d'enregistrer (ou de lire) des informations sur (ou à partir) d'au moins deux disques, ce séquentiellement ou en complète simultanéité, selon deux variantes principales de réalisation.

L'invention a pour objet, selon une première variante, un dispositif optique d'enregistrement-lecture de supports d'informations, les supports d'informations comprenant au moins deux disques organisés en pile et mis en rotation autour d'un axe commun et un équipage mobile comprenant au moins une tête d'enregistrement-lecture étant introduite entre deux disques consécutifs de ladite pile et étant associée à une des faces en regard des deux disques consécutifs, et un ensemble d'émetteurs et de récepteurs de lumière ; dispositif caractérisé en ce que chaque tête d'enregistrement-lecture comporte deux objectifs disposés tête-bêche, d'axes optiques communs et orthogonaux aux faces principales des deux disques consécutifs, un premier organe d'asservissement en position suivant une direction parallèle aux axes optiques, comprenant au moins un solénoïde rendu solidaire d'un des deux objectifs de focalisation et un second organe d'asservissement en position suivant la même direction comprenant au moins un solénoïde rendu solidaire de l'autre objectif de focalisation et en ce que chaque tête d'enregistrement-lecture se présente sous la forme d'un boîtier comportant en ses extrémités un ensemble de pièces en matériau magnétique formant circuit magnétique pour les solénoïdes et percé d'un canal central dans lequel se déplace un des objectifs suivant une direction parallèle à son axe optique et un corps intermédiaire percé d'un canal dans les parois duquel ont été pratiquées deux fenêtres permettant la pénétration à l'intérieur du canal de faisceaux lumineux provenant de deux émetteurs de lumière associés chacun à l'un des deux objectifs de focalisation, canal dans lequel a été disposé un miroir plan unique, réfléchissant sur ses deux faces principales et faisant un angle de $\pi/4$ radians avec la direction des axes optiques pour réfléchir chacun des faisceaux incidents vers l'un des deux objectifs de focalisation.

L'invention a encore pour objet, selon une seconde variante, un dispositif optique d'enregistrement-lecture de supports d'informations, les supports d'informations comprenant au moins deux disques organisés en pile et mis en rotation autour d'un axe commun ($\Delta$) et un équipage mobile comprenant au moins une tête d'enregistrement-lecture, cette tête d'enregistrement-lecture étant introduite entre deux disques consécutifs de ladite pile et étant associée à une des faces en regard des deux disques consécutifs, et un ensemble d'émetteurs et de récepteurs de lumière ; dispositif caractérisé en ce que chaque tête d'enregistrement-lecture comporte deux objectifs disposés tête-bêche, d'axes optiques communs et orthogonaux aux faces principales des deux disques consécutifs, un organe unique d'asservissement en position suivant une direction parallèle aux axes optiques des deux objectifs de focalisation rendus solidaires l'un de l'autre par un support commun et comprenant au moins un solénoïde et en ce que chaque tête d'enregistrement-lecture se présente sous la forme d'un boîtier comprenant en une de ses extrémités un ensemble unique de pièces en matériau magnétique formant circuit magnétique pour le solénoïde et percé d'un canal central dans lequel se déplace le support des objectifs de focalisation suivant une direction parallèle aux axes optiques ; et un corps principal également percé d'un canal dans les parois duquel a été pratiqué un premier couple de fenêtre permettant la pénétration à l'intérieur du canal de faisceaux lumineux provenant de deux émetteurs de lumière ($ER_{10}$, $ER_{20}$) associés aux deux objectifs de focalisation ($OB_1$, $OB_2$) ; le support commun comportant également un canal central dans les parois duquel ont été pratiqués un deuxième couple de fenêtres, en vis-à-vis des fenêtres du premier couple et de forme allongée suivant la direction parallèle aux axes optiques, et un troisième couple de fenêtres de forme également allongée suivant cette direction permettant le passage d'axes de fixation d'un miroir plan unique, réfléchissant sur ses deux faces principales et faisant un angle de $\pi/4$ radians avec la direction des axes optiques pour réfléchir chacun des faisceaux incidents vers l'un des deux objectifs de focalisation ; le miroir plan unique étant fixé par les axes à la paroi interne du canal pratiqué dans le corps principal.

L'invention a encore pour objet un système de mémoire optique tel que décrit dans les revendications 8 et 9.

L'invention sera mieux comprise et d'autres caractéristiques apparaîtront à l'aide de la description qui suit en référence aux figures annexées.

La figure 1 illustre un système de mémoire magnétique de type connu comprenant une pile de disques.

La figure 2 illustre le fonctionnement d'un dispositif d'enregistrement-lecture par voie optique sur un seul disque de l'art connu.

La figure 3 illustre une première variante de réalisation d'un dispositif d'enregistrement-lecture selon l'invention.

Les figures 4 à 6 illustrent d'autres variantes de réalisation de dispositifs d'enregistrement-lecture selon l'invention.

Les figures 7 et 8 sont des coupes partielles de têtes d'enregistrement-lecture utilisables dans les variantes de réalisation des figures 3 à 6.

La figure 9 est un émetteur-récepteur de lumières utilisables dans les variantes de réalisation des figures 3 à 5.

La figure 10 est un exemple de réalisation d'un système de mémoire optique dans lequel est mis en œuvre le dispositif de l'invention.

La figure 11 est un exemple d'équipage mobile de l'invention.

La figure 12 est un diagramme explicatif d'une disposition particulière de l'invention, notamment pour la mise en œuvre de la variante de réalisation de la figure 6.

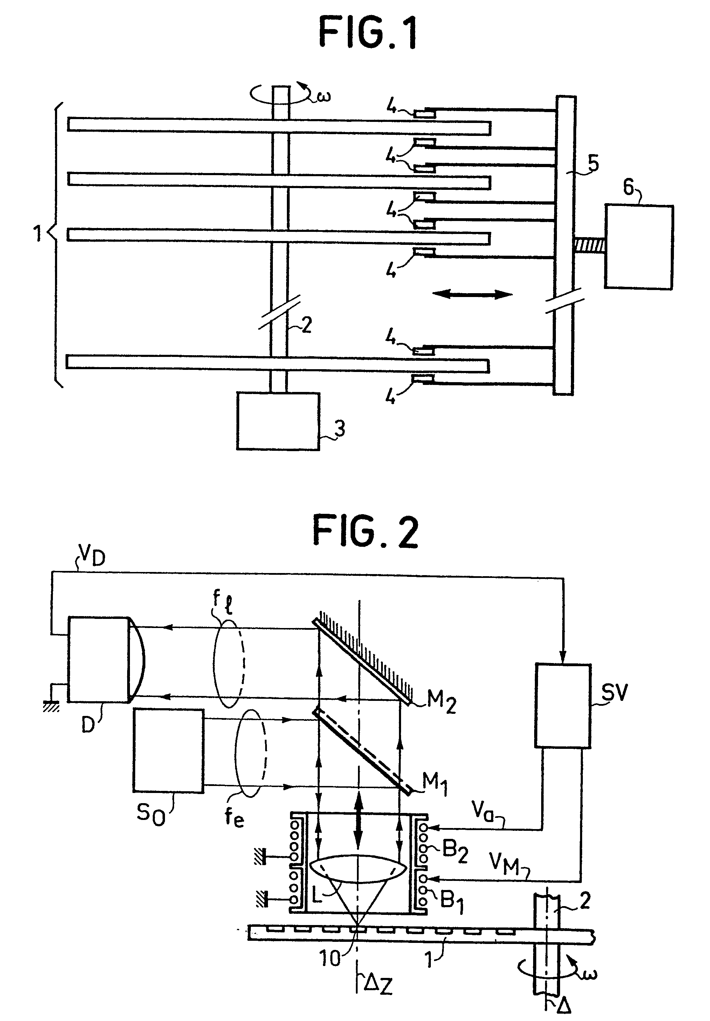

La figure 1 illustre un système de mémoire magnétique comportant plusieurs disques 1 arrangés en pile sur un axe 2 et mis en rotation $\omega$ à l'aide d'un moteur d'entraînement 3. Les disques 1, sur la figure 1, sont du type biface. A chaque face est associée une tête d'enregistrement-lecture 4. Ces têtes 4 sont solidaires d'un support 5, lui-même mû par un moteur 6, de type linéaire par exemple, de façon à ce que ces têtes 4 puissent se mouvoir parallèlement à la surface des disques et de préférence suivant une direction radiale.

L'information, composée de mots binaires est disposée, comme il est connu, le long des pistes circulaires concentriques. L'architecture du système d'enregistrement-lecture doit être choisie avec soin pour permettre un temps d'accès à une zone recherchée le plus court possible. Cet aspect est en dehors du cadre de l'invention. Un procédé connu consiste à enregistrer les informations en parallèle, c'est-à-dire en simultanéité sur les différentes faces des disques. De cette façon, au cours de la lecture, chacun des bits composant un mot binaire va être lu par une des têtes 4 et le mot en son entier va être transmis à des circuits électroniques (non représentés). En fonctionnement les têtes « volent » très près de la surface du disque par l'effet de « coussin d'air ». Seul un asservissement radial est nécessaire.

On pourrait penser appliquer ce procédé au cas de l'enregistrement-lecture par voie optique.

Cependant les contraintes propres à cette approche qui ont été rappelées précédemment et en particulier celles dues au fait que la tête d'enregistrement-lecture doit être dotée d'un dispositif d'asservissement interdisent en pratique une transposition pure et simple du procédé décrit ci-dessus à l'enregistrement-lecture par voie optique.

L'invention va proposer des mesures permettant la mise en œuvre du procédé précité, mise en œuvre ne conduisant pas à une augmentation indésirable de la complexité du système de mémoire à disque optique incorporant le dispositif d'enregistrement-lecture.

Avant d'exposer l'invention, il est utile de rappeler brièvement le fonctionnement d'un dispositif d'enregistrement-lecture sur un seul disque optique. La figure 2 illustre un tel dispositif.

Sur la figure 2, un disque 1 est mis en rotation par un axe 2 et porte des éléments d'information 10 enregistrés sous forme de micro-cuvettes sur des cercles concentriques qui forment une piste de largeur inférieure au micromètre (typiquement 0,6 $\mu$m) et de profondeur faible (0,15 $\mu$s), le pas entre les pistes étant inférieur à 2 $\mu$m (1,6 $\mu$m par exemple). Le disque support d'information a typiquement une trentaine de centimètres de diamètre et les éléments d'information sont enregistrés sur une couronne d'environ 10 cm de rayon. La lecture (et l'enregistrement) d'une piste est effectuée au moyen d'un faisceau $f_e$ en provenance d'une source laser $S_o$ et focalisé sur le disque à l'aide d'un objectif de grande ouverture du type objectif de microscope, symbolisé par la lentille L après réflexion sur une lame semi-transparente $M_1$. Une faible variation de la distance disque-objectif conduit à une défocalisation gênante pour la lecture du fait que la lecture est fondée sur les phénomènes de diffraction du rayonnement concentré sur le disque par le relief inscrit sur la piste. Il est donc nécessaire, dans les dispositifs de lecture destinés à ce type de disque, de prévoir un asservissement vertical de focalisation, les qualités mécaniques du disque n'étant pas suffisantes pour que le signal de lecture soit correct en l'absence d'un tel asservissement. Les dispositifs de lecture actuellement utilisés réalisent cette fonction au moyen d'un solénoïde mobile solidaire de l'objectif de lecture glissant dans un entrefer circulaire. En réalité deux solénoïdes distincts $B_1$ et $B_2$, sont utilisés : un premier solénoïde $B_1$ qui est utilisé pour le maintien de l'objectif dans sa position de repos en l'absence de support à lire, pour la recherche de la zone de focalisation au début de la lecture du support et pour le retour dans la zone d'accrochage de l'asservissement en cours de lecture, et un second solénoïde $B_2$, qui lui est utilisé dans la zone d'accrochage.

En l'absence de support à lire, l'objectif est maintenu dans une position de repos au moyen d'un signal continu $V_M$ qui alimente l'enroulement de prépositionnement $B_1$.

En fonctionnement normal, avec un support à lire, le spot de lecture ou d'enregistrement étant dans une zone voisine de la position focalisée, une fraction de rayonnement incident est réfléchie par le support, traverse l'objectif L, est réfléchie par une lame partiellement réfléchissante $M_1$, est réfléchie par un miroir $M_1$ en un faisceau $f_1$ et est détecté par une cellule de détection D. Le signal électrique fourni par cette cellule $V_D$, caractéristique de l'erreur de focalisation verticale, est appliqué à l'entrée d'une chaîne d'asservissement SV.

Cette chaîne fournit en sortie des signaux de commande d'asservissement $V_a$ du solénoïde $B_2$. Cette chaîne fournit également les signaux de maintien $V_M$ précédemment décrit.

En réalité la cellule D est une cellule complexe à plusieurs quadrants et sert également à la détection des signaux de lecture proprement dits. En effet le faisceau réfléchi par la surface est modulé par les micro-cuvettes 10, à la fréquence de défilement de ces micro-cuvettes devant l'objectif. Des circuits électroniques (non représentés) discriminent les signaux représentant les informations portées par le disque 1 et les signaux haute fréquence utilisés pour l'asservissement.

Il est également nécessaire de prévoir un dispositif assurant le suivi radial de la piste. Suivant la direction radiale, la précision dans le positionnement du spot de lecture doit être de l'ordre de 0,1 $\mu$m pour assurer une bonne lecture de la piste. Ce suivi radial peut être effectué au moyen d'un miroir galvanométrique susceptible de tourner autour d'un axe parallèle au plan du disque et orthogonal au rayon, placé au-dessus de la tête optique et recevant le faisceau laser. Ce peut être le miroir $M_1$. Le suivi radial peut également être assuré par des moyens mécaniques, par exemple un moteur entraînant une vis mère assurant le déplacement de la tête optique suivant cette direction radiale.

Une description plus détaillée d'un dispositif d'enregistrement-lecture peut être trouvée, par exemple non limitatif, dans le brevet français N° 75 33 465 publié sous le N° 2 330 062.

Un des aspects important de l'invention est de diviser le dispositif d'enregistrement-lecture en deux ensembles distincts : un premier ensemble fixe comprenant les organes d'émission et de réception de l'énergie lumineuse utilisée pour la lecture ou l'enregistrement, un second ensemble ou équipage mobile comprenant la tête d'enregistrement-lecture, le moteur d'asservissement vertical et le moteur d'asservissement radial. Les liaisons entre ces deux ensembles sont réalisées à l'aide d'un faisceau de rayons lumineux parallèles.

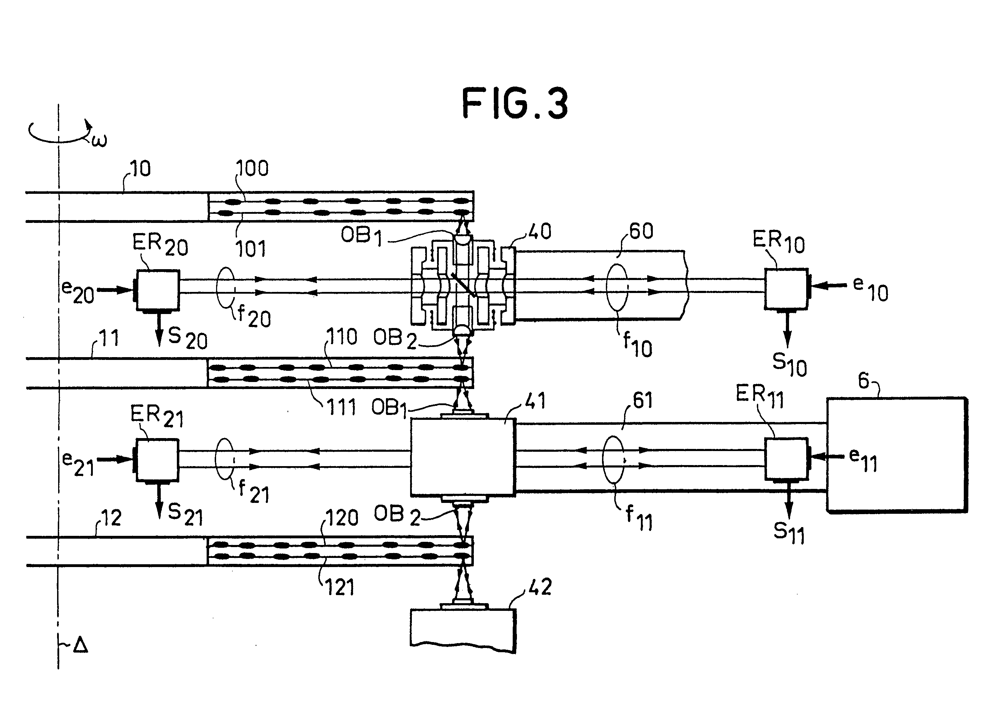

On retrouve cette première disposition sur la figure 3 qui illustre un système optique d'enregistrement-lecture d'informations selon une première variante de réalisation. Ce système comprend une pile de disques optiques 10 à 12 comparables au disque 1 de la figure 2. Cependant ces disques sont des disques bifaces : chaque face (100, 101, 110, 111, 120, 121) comporte des pistes sur lesquelles sont inscrites des informations par exemple sous la forme de micro-cuvettes. Les disques sont mis en rotation $\omega$ autour de l'axe $\Delta$.

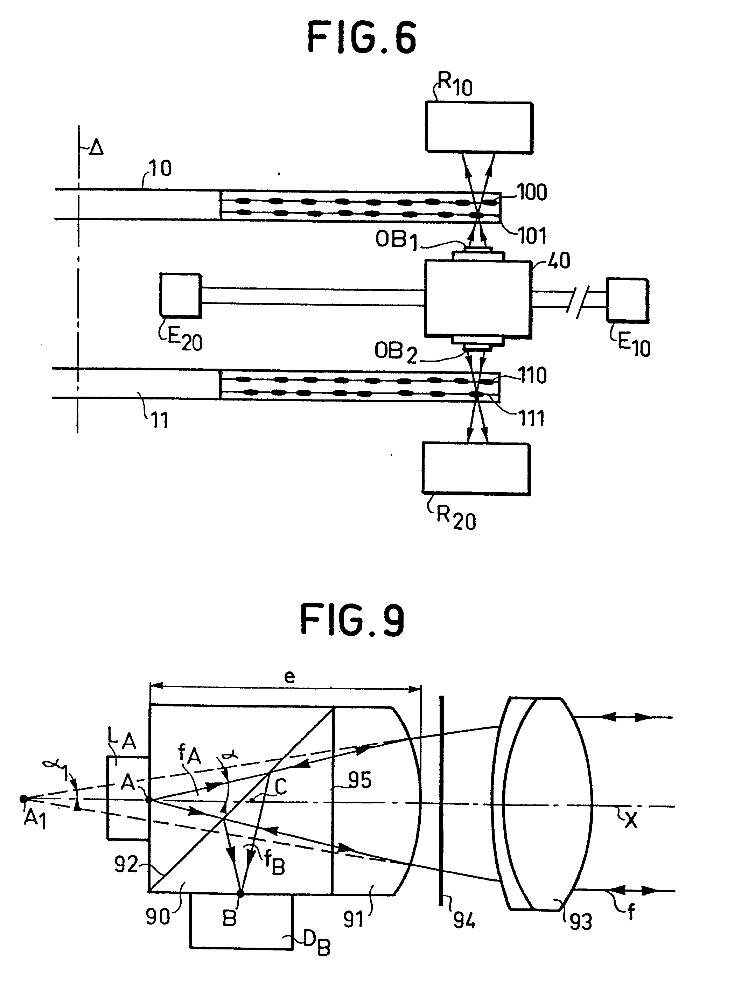

Selon cette première variante de réalisation deux faces en regard, par exemple la face inférieure 101 du disque 10 et la face supérieure 110 du disque 11, peuvent être lues en simultanéïté complète. Pour ce faire chacune des têtes d'enregistrement-lecture 40 à 42 comporte, comme il sera décrit en détail en relation avec la figure 6, deux objectifs du type microscope mobiles suivant une direction parallèle à l'axe. Les mouvements de ces objectifs sont commandés par un ensemble de solénoïdes d'asservissement comparables à ceux décrits en relation avec la figure 2.

Les têtes d'enregistrement-lecture sont mises en mouvement suivant une direction parallèle à la surface des disques par un moteur 6 couplé mécaniquement aux têtes par des arbres de transmission dont deux, 60 et 61, ont été représentés sur la figure 3. Dans une variante préférée ce moteur est un moteur linéaire pas à pas.

Comme il a été mentionné, les têtes d'enregistrement-lecture 40 à 42 communiquent par voie optique avec un ensemble d'émetteurs-récepteurs de lumière $ER_{10}$, $ER_{10}$, $ER_{11}$ et $ER_{21}$. Deux émetteurs-récepteurs de lumière sont associés à chacune des têtes, et plus précisément un émetteur-récepteur de lumière est associé à chacun des deux microscopes que comporte une tête d'enregistrement-lecture, et par le fait même à une des deux faces de disque lues. Sur la figure 3 ont été également représentés les faisceaux de rayons parallèles constituant des liaisons optiques bidirectionnelles $f_{10}$, $f_{20}$, $f_{11}$ et $f_{21}$.

Dans un exemple de réalisation préférée, chacun des émetteurs de lumière est constitué par le dispositif optique stigmatique d'émission-réception de rayonnements cohérents décrit dans la demande de brevet français N° 79 28 694 déposée le 21 Novembre 1979.

Cette demande concerne un dispositif optique formant une image stigmatique d'une source laser positionnée en un point prédéterminé, en vue d'éclairer une surface réfléchissante, ce dispositif assurant par ailleurs la séparation entre le faisceau issu de la source et le faisceau réfléchi par la surface.

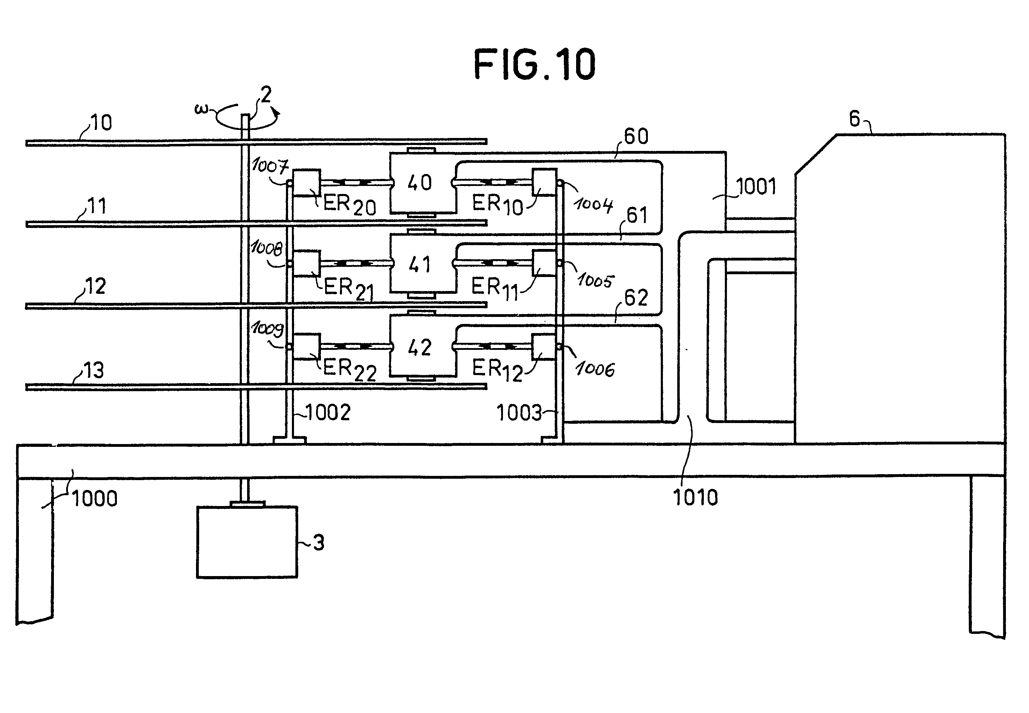

La figure 9 illustre une des variantes de dispositif décrites dans la demande précitée et utilisable dans le cadre de l'invention.

Selon cette variante le dispositif optique comprend un parallélépipède 90 constitué de deux prismes collés. La surface de séparation 92 constituée par l'hypothénuse des deux prismes est traitée de façon à être séparatrice de polarisation : elle transmet en totalité des rayonnements ayant une polarisation ayant une polarisation donnée et elle réfléchit en totalité des rayonnements ayant une polarisation orthogonale à la précédente. Une lentille plan-convexe 91, formée du même matériau que le cube, est collée sur l'une des faces, 95, du cube 90. Le centre C de la sphère formée par la face convexe de la lentille 2 est située sur un plan médian du cube. Son rayon de courbure R tel que le point A situé au point de rencontre de l'axe optique X de la lentille 91 avec la face du cube opposée à la face 95 soit un point de Weierstrass du dioptre constitué par la surface sphérique de la lentille 91. En d'autres termes, le bloc optique constitué du cube 90 et de la lentille 91 forme du point A une image stigmatique au point $A_1$, dont on sait qu'elle est virtuelle si A est réel. Les conditions de Weierstrass peuvent être énoncées comme suit : lorsque l'indice de réfraction commun au cube et à la lentille est n et lorsque le milieu extérieur est de l'air : CA = R/n, $CA_1$ = nR. La première condition donne la relation entre l'épaisseur de l'ensemble et le rayon R : R = e n/n + 1. Lorsque cette relation est vérifiée, si on place en A une source de rayonnement polarisée dans la direction correspondant à une transmission par la face 92, émettant un faisceau divergent de demi-angle au sommet $\alpha_0$ dans l'air, cet angle devient $\alpha$ dans le cube et le faisceau émergent de la lentille, issu du point virtuel $A_1$, a un demi-angle au sommet $\alpha_1$ avec $\sin \alpha_1 = \sin \alpha/n$ et $\sin \alpha = \sin \alpha 0/n$. Par ailleurs, l'élément 90 étant cubique, le point B conjugué de A par rapport à la face 92 est situé sur une autre face du cube et est également un point stigmatique, si bien qu'un faisceau convergent au point virtuel $A_1$ arrivant sur la lentille 91 et ayant une polarisation orthogonale à la précédente est réfléchi par la face 92 et converge au point B. Réciproquement, un faisceau issu de B polarisé orthogonalement à celle du faisceau issu de A est réfléchi par la face 92 et se superpose au faisceau issu de A. Le fait que le parallélépipède 90 et la lentille 91 soient décrits comme deux éléments séparés n'est pas nécessaire. Le bloc optique 90, 91 peut également être réalisé de telle sorte que la face 95 ne soit pas matérialisée.

Le dispositif est destiné à être utilisé en association avec un laser semi-conducteur $L_A$ ayant son centre de phase au point A et un moyen de détection opto-électrique centré sur le point B ou au voisinage du point B. Les rôles respectifs de A et de B peuvent être inversés, c'est-à-dire que le moyen de détection peut être situé en A, donc sur l'axe x et le laser au point conjugué B. Le dispositif est complété par un objectif 93 d'axe optique confondu avec l'axe x et placé derrière la lentille 91 de façon que son foyer soit au point $A_1$. Cet objectif est conçu de façon à ne pas présenter d'aberrations sphériques pour les ouvertures de faisceau maximales fournies par le laser placé en A, l'ensemble du système optique devant rester stigmatique. Il peut s'agir par exemple d'un doublet et on obtient donc un faisceau parallèle f qui est transmis à la tête d'enregistrement-lecture associée au dispositif. Si le faisceau en retour de la tête est confondu avec le faisceau incident. Pour que ce faisceau se focalise en B, il faut que sa polarisation orthogonale à la polarisation du faisceau issu de A. Pour cela, on place sur le trajet commun aux faisceaux incident et réfléchi une lame quart d'onde 94 soit entre la lentille 91 et l'objectif 93, soit entre l'objectif 93 et la tête associée. La lame 94 a son axe optique faisant un angle de $\pi/4$ avec la direction de la polarisation du faisceau incident, de sorte qu'après une traversée de la lame, on obtient une polarisation circulaire et après un aller et retour, on retrouve une polarisation linéaire, mais orthogonale à la polarisation initiale. Cette séparation entre le faisceau issu du laser $L_A$ et le faisceau réfléchi pourrait éventuellement se faire sans lame quart d'onde et avec une surface de séparation 92 non séparatrice de polarisation mais simplement semi-transparente. Les moyens de détection $D_B$ placés en B ou au voisinage de B peuvent comprendre, comme il est connu, quatre photodiodes disposées dans un plan parallèle à la face du cube comprenant le point B et à une distance prédéterminée de cette face. Ces diodes ont un double rôle : les signaux de sortie sont utilisés pour la lecture proprement dite et pour créer des signaux nécessaires aux asservissements verticaux et radiaux de position de l'objectif associé au dispositif d'émission-réception.

Les signaux de commande des lasers ainsi que leur alimentation électrique sont désignés par les références $e_{10}$, $e_{20}$, $e_{11}$ et $e_{21}$ sur la figure 3. Il s'agit de liaisons électriques conventionnelles. Il en est de même pour les signaux de sortie des photodiodes : $S_{10}$, $S_{20}$, $S_{11}$ et $S_{21}$. Ces signaux sont transmis ou proviennent des circuits électroniques de traitement de signaux associés au système de mémoire optique. Ces circuits sortent du cadre de l'invention et ne seront pas décrits.

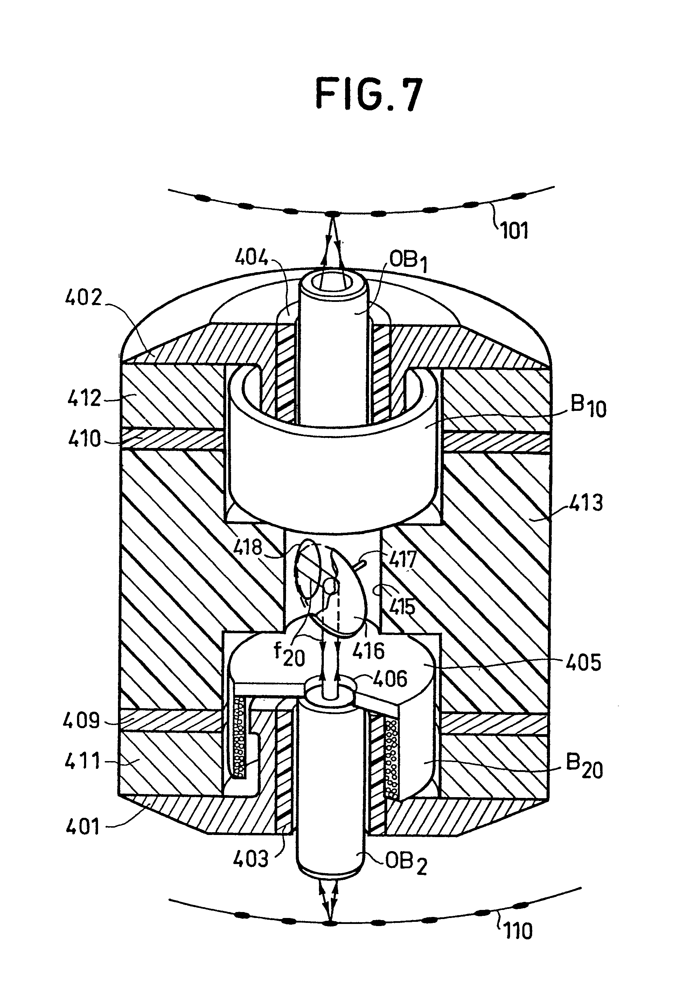

La tête d'enregistrement-lecture de la variante de réalisation de la figure 3 va maintenant être décrite en relation avec la figure 7. Les dispositions prises pour la réalisation de cette tête constituent un autre aspect important de l'invention et contribuent, avec le découplage en deux ensembles distincts du dispositif de l'invention, à abaisser notablement le poids et l'encombrement de ce dispositif et plus particulièrement le poids et l'encombrement de l'équipage mobile, diminuant de ce fait l'inertie de cet équipage.

Chaque tête d'enregistrement comprend comme il a été mentionné, deux objectifs de focalisation $OB_1$ et $OB_2$ disposés tête-bêche. Ces objectifs sont du type microscope. Ils se présentent sous la forme d'un cylindre allongé d'un diamètre d'environ 7 mm. La distance focale est de l'ordre de 5 mm. Le poids de l'objectif est de l'ordre de 1 g.

Ces objectifs sont chacun solidaires d'un solénoïde d'asservissement respectivement $B_{10}$ et $B_{20}$, composé en réalité comme il a été rappelé en relation avec la figure 2 de deux bobinages. Comme illustré par la figure 7, qui comporte des coupes partielles pour mettre en évidence les éléments cachés, ces ensembles objectifs-solénoïdes coulissent dans un puit pratiqué dans une pièce polaire en métal doux, respectivement 401 et 402. Les parois internes sont tapissées d'un revêtement permettant un glissement sans friction. Le matériau de ce revêtement peut comprendre notamment du polytétrafluoroéthylène.

Les disques lus par cette tête peuvent avoir un voile de l'ordre de 1 mm. L'amplitude des mouvements de l'objectif associé à une face de disques doit donc permettre des corrections de positionnement vertical de cet ordre de grandeur. La distance entre l'extrémité de l'objectif et la surface du disque est typiquement de l'ordre de 0,5 à 1 mm.

Le circuit magnétique est refermé par une deuxième pièce polaire et une pièce annulaire en ferrite, respectivement 409-411 et 410-412.

L'ensemble de ces pièces métalliques est solidaire d'un corps en matériau léger 413, par exemple en matériau plastique. Ce corps est lui-même percé d'un puit vertical 415. Dans ce puit est disposé un miroir 416 réfléchissant sur ses deux faces. Il peut s'agir d'un miroir en métal poli ou de préférence un miroir en verre dont les surfaces sont traitées par un dépôt de matériau diélectrique. Ce miroir est fixe par rapport au corps 413 de la tête. Les deux objectifs $OB_1$ et $OB_2$ ont même axe optique, cet axe étant orthogonal aux surfaces des disques lus. Le miroir 416 fait un angle de $\pi/4$ avec cet axe optique. Il est fixé par des axes 417 à la paroi. Le corps de la tête 413 comporte en outre deux ouvertures dont l'une 418 est visible sur la figure 7. Ces ouvertures sont disposées de part et d'autre du miroir 416. Elles sont destinées à laisser pénétrer les faisceaux parallèles en provenance des émetteurs-récepteurs de lumière précédemment décrits.

Des canaux de sortie, non représentés, doivent être également prévus pour laisser sortir les fils de liaison électrique véhiculant les signaux de commande des solénoïdes.

Sur la figure 7, un de ces faisceaux a été représenté. Il s'agit à titre d'exemple du faisceau $f_{20}$ de la figure 3. Ce faisceau est réfléchi vers l'objectif $OB_2$ et focalisé sur la surface 110 du disque lu dont une piste a été symbolisée par des traits discontinus.

Chacun des objectifs étant actionné par un solénoïde d'asservissement vertical indépendant les deux faces vis-à-vis 101 et 110 peuvent être lues en complète simultanéité.

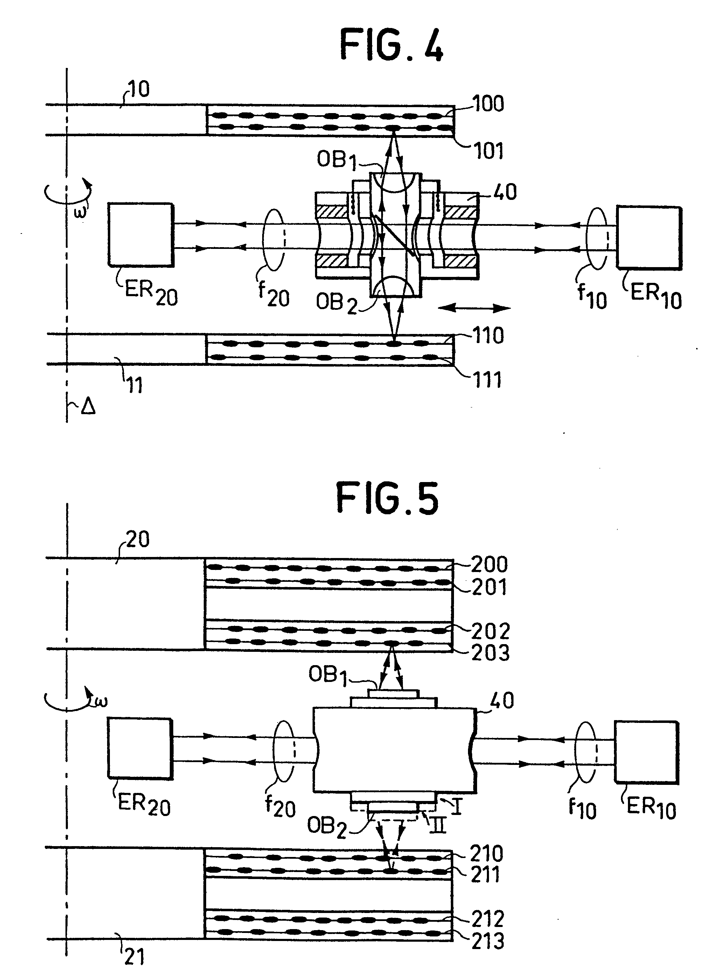

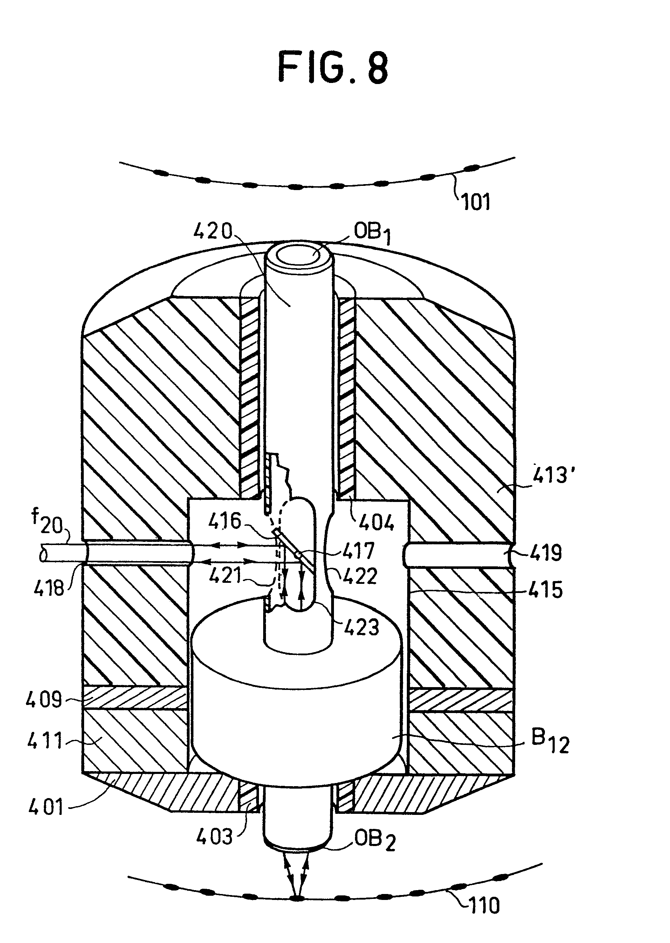

Une seconde variante de réalisation, simplifiée, de l'invention va maintenant être décrite en relation avec les figures 4 et 8. On retrouve les éléments de la figure 3. La différence essentielle est constituée par les têtes d'enregistrement-lecture dont une seule a été représentée.

Selon cette variante, la tête comporte un seul solénoïde d'asservissement $B_{12}$ pour les deux objectifs $OB_1$, $OB_2$ qui sont rendus solidaires l'un de l'autre. On retrouve les mêmes éléments que sur la figure 7 et il est inutile de les rappeler. Les seules différences sont le corps de la tête 413' qui s'étend dans le volume précédemment occupé par les pièces du circuit magnétique 402, 410, 412 et le fait que les deux objectifs sont montés sur un corps commun cylindrique 420. Ce corps commun est percé de quatre ouvertures : deux 421 et 422 en vis-à-vis des ouvertures, 418 et 419 respectivement, laissant entrer les faisceaux lumineux à l'intérieur de la tête et deux autres supplémentaires, dont une seule, 423, est visible sur la figure 8, pour permettre le passage des axes de fixation du miroir 416, l'axe 417 par exemple. L'étendue de ces ouvertures doit être suffisante pour permettre les mouvements verticaux du cylindre permettant l'asservissement de l'un des microscope $OB_1$ ou $OB_2$ sur la face du disque qui lui est associée, respectivement 101 ou 110. En effet dans cette version simplifiée on ne peut lire (ou inscrire) qu'une seule face à la fois. Si le système de mémoire optique comporte n disques, donc 2 n faces, seul l'accès simultané à n pistes d'information est permis.

L'invention permet également de lire des informations sur des disques multicouches. De tels disques ont été proposés récemment. Ils comportent plusieurs niveaux d'information pour chacune de leur deux faces. Ces niveaux correspondent à des couches de métallisation partielle déposées lors d'un processus séquentiel de fabrication sur des disques élémentaires qui sont ensuite assemblés par divers procédés qui sortent du cadre de l'invention. La figure 5 illustre schématiquement de tels disques : 20 et 21, et les couches successives comportent des informations enregistrées : 200 à 203, 210 à 213. L'une des deux têtes d'enregistrement-lecture précédemment décrites peut être utilisée.

Pour lire la piste 210, par exemple, on focalise le faisceau provenant de l'émetteur-récepteur de lumière $ER_{20}$ à l'aide de l'objectif $OB_2$ sur cette piste. Cette phase de lecture est représentée par la position I de l'objectif $OB_2$. Si on désire lire la piste 211, on focalise le faisceau sur cette piste : objectif $OB_2$ représenté en pointillé en position II. Lors du passage de la couche 210, comme il est bien connu, une partie de l'intensité lumineuse du faisceau est réfléchie et une partie est transmise vers la couche 211, réfléchie ensuite par cette couche et de nouveau retransmise en partie au passage de la couche 210 vers l'objectif $OB_2$. En ajustant le coefficient de réflexion des diverses couches (qui peuvent être en nombre plus grand que deux, trois par exemple), on peut s'arranger pour que la quantité de lumière qui est réfléchie vers l'objectif de lecture soit comparable quelle que soit la couche lue. Dans le cadre de l'invention, la seule adaptation nécessaire est que l'amplitude possible des mouvements verticaux de l'objectif de lecture soit suffisante pour que l'on puisse, d'une part, réaliser les changements de focalisation pour passer de la première couche à la dernière et, d'autre part, tenir compte du voile du disque comme précédemment.

Enfin la lecture et/ou l'enregistrement de disques par transmission est aussi possible par l'invention. La figure 6 illustre une telle disposition. Il faut alors placer des détecteurs du côté du disque opposé à la tête d'enregistrement-lecture. Les émetteurs-récepteurs de lumière sont remplacés par de simples émetteurs de lumière $E_{10}$, $E_{20}$.

Pour ce faire, on peut mettre en œuvre par exemple le dispositif décrit dans la demande de brevet européen, publiée sous le N° 0 023 868. Le dispositif décrit dans cette demande de brevet comporte un équipage mobile comprenant un miroir galvanométrique et un objectif de focalisation, mobile par rapport au support d'information et une source d'énergie lumineuse fixe comprenant au moins un émetteur laser. Des moyens optiques grossissant de type afocal étant en outre insérés entre l'équipage mobile et la source d'énergie lumineuse ; le grossissement étant suffisant pour que le faisceau émergeant des moyens optiques recouvre en sa totalité la pupille d'entrée de l'objectif. Par cette disposition, le faisceau de lumière qui atteint l'équipage mobile reste un faisceau de rayons parallèles, quelque soit la position de cet équipage par rapport à la source d'énergie lumineuse.

Dans le cadre de l'invention, l'objectif de focalisation est l'un des objectifs $OB_1$ ou $OB_2$. Les détecteurs de lumière ou récepteurs $R_{10}$ et $R_{20}$ comprennent comme précédemment décrit un assemblage de photo-détecteurs, mais doivent êtres liés à l'équipage mobile.

La lecture d'une piste particulière, à titre d'exemple 101 et 111 comme illustrée sur la figure 6, s'effectue par focalisation à l'aide de l'objectif associé du faisceau de lecture sur cette piste. On a supposé sur la figure 6 que la tête d'enregistrement-lecture était du type de celle décrite en relation avec la figure 7, c'est-à-dire une tête permettant la lecture simultanée de deux faces de disque.

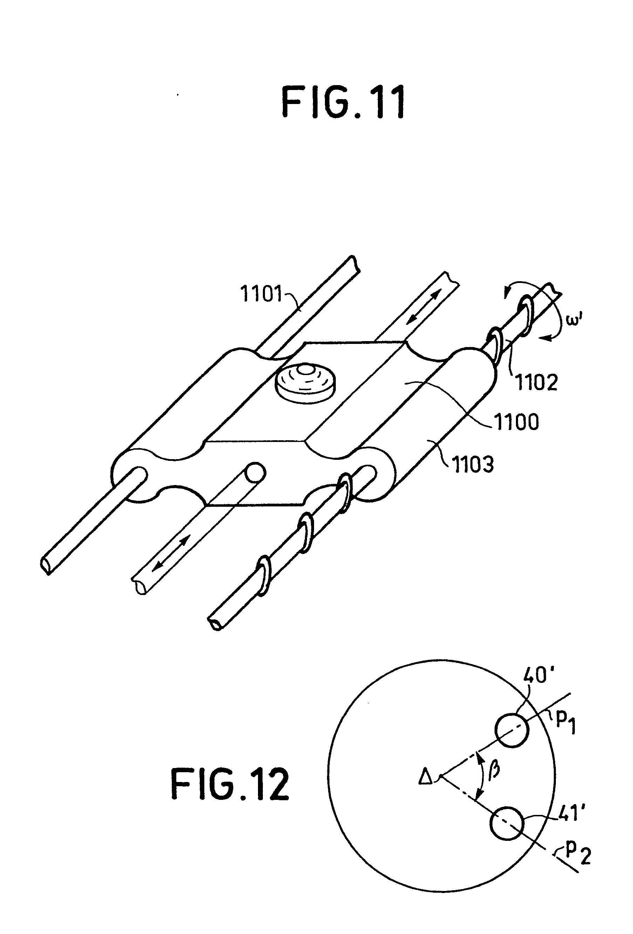

Si le système doit comporter plus de deux disques, il faut simplement prévoir une tête par deux disques. On ne peut lire simultanément (ou inscrire) dans ce cas qu'au maximum (avec la tête d'enregistrement de la figure 7) que la moitié des faces portant des informations. Si on désire lire (ou inscrire) simultanément toutes les faces, il faut alors décaler les têtes d'enregistrement-lecture successives et les disposer dans des plans verticaux différents du fait de la présence des récepteurs de lumière. Les têtes d'enregistrement-lecture 40' destinées à lire les premier et second disques, les cinquième et sixième disques et ainsi de suite peuvent être situées dans un premier plan vertical $p_1$, comme illustré sur la figure 12, et les têtes 41' destinées aux troisième et quatrième disques, septième et huitième disques et ainsi de suite, dans un second plan vertical $p_2$, faisant un angle B avec le premier plan $p_1$. Dans ce cas, il faut deux dispositifs d'entraînement radial des têtes. Cette disposition particulière peut d'ailleurs être adoptée pour les systèmes décrits en relation avec les figures 3 à 5. Dans ce cas les têtes 40' et 41' sont associées à des zones différentes d'une même face de disque, ce qui permet de diminuer le temps d'accès moyen à une piste prédéterminée ou de permettre la lecture simultanée de plusieurs pistes sur une même face.

La figure 10 illustre un exemple de réalisation concrète d'un système de mémoire optique comprenant une pile de disques et incorporant le dispositif d'enregistrement-lecture de l'invention.

Le système comprend une pile de disques 10 à 13 mis en rotation $\omega$ par l'axe 2 entraîné par un moteur 3. L'ensemble est supporté par le bâti 1 000 du système de mémoire optique. Les têtes d'enregistrement-lecture sont supportées par un équipage mobile comprenant les bras 60 à 62 d'insertion des têtes entre les disques et un support 1 001 entraîné par un moteur 6 pas à pas de type linéaire. L'équipage mobile est guidé à l'aide d'un organe 1 010 comprenant, notamment, des roulements à billes ou des rouleaux de guidage, non représentés sur la figure 10.

Les émetteurs-récepteurs de lumière $ER_{10}$ à $ER_{12}$ et $ER_{20}$ à $ER_{22}$ sont supportés respectivement par les bras 1 004 à 1 006 et 1 007 à 1 009, des potences 1002 et 1003 liés au bâti 1 000.

Au lieu d'utiliser un moteur linéaire, on peut également utiliser un système du type à vis sans fin comme illustré sur la figure 11. Chaque tête se présente sous la forme d'un chariot 1 100 reposant sur deux tiges de guidage 1 101 et 1 102 parallèles à la surface des disques à lire dont l'une, 1 102, est munie d'un filetage hélicoïdal à pas très lâche (de l'ordre de 5 mm) et est mise en rotation $\omega'$ à l'aide d'un moteur pas à pas, non représenté. L'aile 1 103 du chariot présente un filetage intérieur complémentaire. Il s'en suit que le chariot supportant les objectifs de focalisation, dont l'un, $OB_1$, est visible sur la figure 10, est entraîné parallèlement à la surface des disques à lire.

On peut également utiliser, dans une variante non représentée, le même chariot glissant sur deux tiges lisses parallèles mais entrainé par un système à poulies. Ce type d'entraînement est couramment utilisé sur certaines tables traçantes. Il faut noter cependant dans ce cas que l'asservissement radial de la tête d'enregistrement-lecture, que l'on a supposé implicitement réalisé par le moteur d'entraînement de l'équipage mobile, sera difficile à obtenir par ce type d'entraînement. Il faut alors modifier légèrement la conception des têtes d'enregistrement-lecture et remplacer le miroir fixe de renvoi 416 (figures 7 ou 8) par un miroir galvanométrique commandé par un circuit électro-magnétique du type galvanomètre. Ce type de miroir est bien connu de l'homme de métier et mis couramment en œuvre dans les têtes d'enregistrement-lecture de l'art connu.

**Revendications**

1. Dispositif optique d'enregistrement-lecture de supports d'informations, les supports d'informations comprenant au moins deux disques (10, 11, 12) organisés en pile et mis en rotation ($\omega$) autour d'un axe commun ($\Delta$) et un équipage mobile comprenant au moins une tête d'enregistrement-lecture (40, 41, 42), cette tête d'enregistrement-lecture (40) étant introduite entre deux disques consécutifs (10, 11) de ladite pile et étant associée à une des faces en regard (101, respectivement 110) des deux disques consécutifs (10, 11), et un ensemble d'émetteurs et de récepteurs de lumière ($ER_{10}$, $ER_{20}$, $ER_{11}$, $ER_{21}$) ; dispositif

caractérisé en ce que chaque tête d'enregistrement-lecture comporte deux objectifs ($OB_1$, $OB_2$) disposés tête-bêche, d'axes optiques communs et orthogonaux aux faces principales des deux disques consécutifs, un premier organe d'asservissement en position suivant une direction parallèle aux axes optiques, comprenant au moins un solénoïde ($B_{10}$) rendu solidaire d'un des deux objectics de focalisation ($OB_1$) et un second organe d'asservissement en position suivant la même direction comprenant au moins un solénoïde ($B_{20}$) rendu solidaire de l'autre objectif de focalisation ($OB_2$) et en ce que chaque tête d'enregistrement-lecture se présente sous la forme d'un boîtier comportant en ses extrémités un ensemble de pièces (401, 411, 409, respectivement 410, 412, 402) en matériau magnétique formant circuit magnétique pour les solénoïdes et percé d'un canal central dans lequel se déplace un des objectifs ($OB_1$, respectivement $OB_2$) suivant une direction parallèle à son axe optique et un corps intermédiaire (413) percé d'un canal dans les parois duquel ont été pratiquées deux fenêtres (418) permettant la pénétration à l'intérieur du canal de faisceaux lumineux ($f_{10}$, $f_{20}$) provenant de deux émetteurs de lumière ($ER_{10}$, $ER_{20}$) associés chacun à l'un des deux objectifs de focalisation ($OB_1$, $OB_2$), canal dans lequel a été disposé un miroir plan unique (416), réfléchissant sur ses deux faces principales et faisant un angle de 1/4 radians avec la direction des axes optiques pour réfléchir chacun des faisceaux incidents ($f_{10}$, respectivement $f_{20}$) vers l'un des deux objectifs de focalisation ($OB_1$, respectivement $OB_2$).

2. Dispositif optique d'enregistrement-lecture de supports d'informations, les supports d'informations comprenant au moins deux disques (10, 11, 12) organisés en pile et mis en rotation ($\omega$) autour d'un axe commun ($\Delta$) et un équipage mobile comprenant au moins une tête d'enregistrement-lecture (40, 41, 42), cette tête d'enregistrement-lecture (40) étant introduite entre deux disques consécutifs (10, 11) de ladite pile et étant associée à une des faces en regard (101, respectivement 110) des deux disques consécutifs (10, 11), et un ensemble d'émetteurs et de récepteurs de lumière ($ER_{10}$, $ER_{20}$, $ER_{11}$, $ER_{21}$) ; dispositif caractérisé en ce que chaque tête d'enregistrement-lecture comporte deux objectifs ($OB_1$, $OB_2$) disposés tête-bêche, d'axes optiques communs et orthogonaux aux faces principales des deux disques consécutifs, un organe unique d'asservissement en position suivant une direction parallèle aux axes optiques des deux objectifs de focalisation ($OB_1$, $OB_2$) rendus solidaires l'un de l'autre par un support commun (420) et comprenant au moins un solénoïde ($B_{12}$) et en ce que chaque tête d'enregistrement-lecture se présente sous la forme d'un boîtier comprenant en une de ses extrémités un ensemble unique de pièces en matériau magnétiques (401, 411, 409) formant circuit magnétique pour le solénoïde et percé d'un canal central dans lequel se déplace le support (420) des objectifs de focalisation ($OB_1$,

$OB_2$) suivant une direction parallèle aux axes optiques ; et un corps principal (413') également percé d'un canal (415) dans les parois duquel a été pratiqué un premier couple de fenêtre (418, 419) permettant la pénétration à l'intérieur du canal de faisceaux lumineux ($f_{10}$, $f_{20}$) provenant de deux émetteurs de lumière ($ER_{10}$, $ER_{20}$) associés aux deux objectifs de focalisation ($OB_1$, $OB_2$) ; le support commun (420) comportant également un canal central dans les parois duquel ont été pratiqués un deuxième couple de fenêtres (421, 422), en vis-à-vis des fenêtres du premier couple et de forme allongée suivant la direction parallèle aux axes optiques, et un troisième couple de fenêtres (423) de forme également allongée suivant cette direction permettant le passage d'axes de fixation (417) d'un miroir plan unique (416), réfléchissant sur ses deux faces principales et faisant un angle de 1/4 radians avec la direction des axes optiques pour réfléchir chacun des faisceaux incidents ($f_{10}$, respectivement $f_{20}$) vers l'un des deux objectifs de focalisation ($OB_1$, respectivement $OB_2$) ; le miroir plan unique (416) étant fixé par les axes (417) à la paroi interne du canal (415) pratiqué dans le corps principal (413').

3. Dispositif selon l'une quelconque des revendications 1 ou 2, caractérisé en ce que les émetteurs de lumière comprennent des moyens optiques stigmatiques collimateurs de manière à produire des faisceaux de rayons lumineux ($f_{10}$, $f_{20}$, $f_{11}$, $f_{21}$) parallèles entre eux et parallèles aux faces principales des disques, chaque objectif étant associé à un émetteur et à un récepteur de lumière respectif.

4. Dispositif selon la revendication 3, dans lequel en outre les disques sont enregistrables ou lisibles optiquement par réflexion du faisceau focalisé par les objectifs de focalisation ($OB_1$, $OB_2$) sur l'une des faces des faces des disques (101, 110) portant des informations ; dispositif caractérisé en ce que chaque couple d'émetteurs et de récepteurs de lumière associé à un des deux objectifs ($OB_1$, $OB_2$) de chaque tête d'enregistrement-lecture se présente sous la forme d'un boîtier unique ($ER_{10}$, $ER_{20}$) et en ce que chaque boîtier comprend une source laser à semi-conducteur ($L_A$), des moyens de détection optoélectroniques ($D_B$) et un bloc optique réfringent délimité par une première face plane et une face convexe de forme sphérique, l'un des points de Weierstrass (A) du dioptre formé par la face convexe étant situé sur la face plane, celle-ci étant perpendiculaire à la droite joignant ce point de Weierstrass et le centre de la face sphérique, la source ($L_A$) étant placée au voisinage de ce point (A) ; et en ce que les moyens stigmatiques (93) collimateurs sont situés sur le trajet du faisceau laser (f) à l'extérieur du bloc optique permettant de le rendre parallèle.

5. Dispositif selon l'une quelconque des revendications 1 ou 2, caractérisé en ce que l'équipage mobile est entraîné par un moteur linéaire pas à pas (6).

6. Dispositif selon l'une quelconque des revendications 1 ou 2, caractérisé en ce que le boîtier (1 100) de chaque tête d'enregistrement-lecture repose sur deux tiges (1 101, 1 102) parallèles entre elles et parallèles aux faces principales des disques et en ce que l'une de ces tiges (1 102) est mise en rotation (ω') par un moteur rotatif pas à pas et comporte un pas de vis hélicoïdal entraînant le boîtier suivant une direction parallèle aux tiges.

7. Dispositif selon l'une quelconque des revendications 1 ou 2, caractérisé en ce que le boîtier de chaque tête d'enregistrement-lecture repose sur deux tiges parallèles et en ce que une courroie entraînée par un moteur rotatif pas à pas, fixée en un point au boîtier fait glisser celui-ci le long des deux tiges parallèles.

8. Système de mémoire optique comprenant au moins deux disques organisés en pile (10 à 13) caractérisé en ce qu'il comprend un dispositif selon l'une quelconque des revendications 1 à 7.

9. Système de mémoire optique comprenant au moins deux disques organisés en pile (10 à 13) caractérisé en ce qu'il comprend au moins deux dispositifs selon l'une quelconque des revendications 1 à 7 ; les têtes d'enregistrement-lecture (40') d'un premier dispositif étant disposées dans un premier plan (p_1) orthogonal aux faces principales des disques et les têtes d'enregistrement-lecture (41') d'au moins un second dispositif dans un second plan (p_2) distinct du premier et également orthogonal aux faces principales des disques.

**Claims**

1. Optical device for recording and reading of information carriers, the information carriers comprising at least two discs (10, 12, 13) organized as a stack and rotationally driven (ω) about a common axis (Δ), and a movable unit comprising at least one recording/reading head (40, 41, 42), said recording/reading head (40) being inserted between two successive discs (10, 11) of the stack and being associated with one of the opposed faces (101, 102, respectively) of the two successive discs (10, 11), and a light emitter/receiver set ($ER_{10}$, $ER_{20}$, $ER_{11}$, $ER_{21}$) ; the device being characterized in that each recording/reading head comprises two objectives ($OB_1$, $OB_2$) having mutually inverted positions and common optical axes which are perpendicular to the main faces of the two successive discs, a first member for positional slaving in a direction parallel to the optical axes, comprising at least one solenoid ($B_{10}$) joined with one of the two focusing objectives ($OB_1$), and a second member for positional slaving in the same direction, comprising at least one solenoid ($B_{20}$) joined with the other focusing objective ($OB_2$), and in that each recording/reading head has the shape of a housing comprising, at its ends, a set of members (401, 411, 409 and 410, 412, 402, respectively) of magnetic material forming a magnetic circuit for the solenoid, and penetrated by a central channel wherein one of the objectives ($OB_1$ and $OB_2$, respectively) may be displaced along a direction parallel to its optical axis, and an intermediate body (413) penetrated by a channel the walls of which are provided with two windows (418) permitting the penetration of light beams ($f_{10}$, $f_{20}$) into the interior of the channel, the light beams originating from two light emitters ($ER_{10}$, $ER_{20}$) each of which is associated with one of the two focusing objectives ($OB_1$, $OB_2$), a single plane mirror (416) being located within the channel and being reflecting on its both main faces and forming an angle of 1/4 radian with the direction of the optical axes for reflecting each of the incident beams ($f_{10}$ and $f_{20}$, respectively) towards one of the two focusing objectives ($OB_1$ and $OB_2$, respectively).

2. Optical device for recording/reading of information carriers, the information carriers comprising at least two discs (10, 11, 12) organized as a stack and rotationally driven (ω) about a common axis (Δ) and a movable unit comprising at least one recording/reading head (40, 41, 42), this recording/reading head (40) being inserted between two successive discs (10, 11) of the stack and being associated with one of the opposing faces (101 and 110, respectively) of two successive discs (10, 11), and a light emitter/receiver set ($ER_{10}$, $ER_{20}$, $ER_{11}$, $ER_{21}$) ; the device being characterized in that each recording/reading head comprises two objectives ($OB_1$, $OB_2$) having mutually inverted positions and common optical axes which are perpendicular to the main faces of the two successive discs, and a single member for positional slaving in a direction parallel to the optical axes of the two focusing objectives ($OB_1$, $OB_2$) which are joined with each other by a common fixture (420), and comprising at least one solenoid ($B_{12}$), and in that each recording/reading head has the shape of a housing comprising, at one of its ends, a single set of members of magnetic material (401, 411, 409) forming a magnetic circuit for the solenoid, and penetrated by a central channel wherein the fixture (420) of the focusing objectives ($OB_1$, $OB_2$) may be displaced along a direction parallel to the optical axes ; and a main body (413') which is also penetrated by a channel (415) the walls of which are provided with a first couple of windows (418, 419) allowing the penetration of light beams ($f_{10}$, $f_{20}$) into the interior of the channel, these light beams originating from two light emitters ($ER_{10}$, $ER_{20}$) associated with the two focusing objectives ($OB_1$, $OB_2$) ; the common fixture (420) also comprising a central channel the walls of which are provided with a second couple of windows (421, 422) facing the windows of the first couple and having elongated shapes in a direction parallel to the optical axes, and a third couple of windows (423) also having elongated shapes along this direction and allowing the passage of mounting axes (417) for mounting a single plane mirror (416) reflecting on its both main faces and forming an angle of 1/4 radian with the direction of the optical axes for reflecting each of the incident beams ($f_{10}$ and $f_{20}$, respectively) onto

one of the focusing objectives ($OB_1$ and $OB_2$, respectively) ; said axes (417) mounting the single plane mirror (416) on the inner wall of the channel (415) provided within the main body (413').

3. Device according to any of claims 1 and 2, characterized in that the light emitters comprise stigmatic collimator means in a manner to produce parallel light beams ($f_{10}$, $f_{20}$, $f_{11}$, $f_{21}$) which are parallel to the main faces of the discs, each objective being associated with one light emitter and with a corresponding light receiver.

4. Device according to claim 3, wherein, in addition, the discs may be optically recorded or read by reflection of the beam which is focused by one of the focusing objectives ($OB_1$, $OB_2$) onto one of the faces of the discs (101, 110) carrying the information ; the device being characterized in that each couple of light emitters and receivers associated with one of the two objectives ($OB_1$, $OB_2$) of each recording/reading head has the shape of a single housing ($ER_{10}$, $ER_{20}$), and in that each housing comprises a semi-conductor laser source ($L_A$), opto-electronic detection means ($D_B$) and a refringent optical block defined by a first plane face and a convex face of spherical shape, one of the Weierstrass' points (A) of the diopter formed by the convex face lying in the plane face, the latter being perpendicular to the straight line joining this Weierstrass' point with the center of the spherical face, the source ($L_A$) being located in the neighborhood of this point (A) ; and in that the stigmatic collimator means (93) are located on the path of the laser beam (f) outside the optical block to make it parallel.

5. Device according to any of claims 1 and 2, characterized in that the movable unit is driven by a linear step motor (6).

6. Device according to any of claims 1 and 2, characterized in that the housing (1,100) of each recording/reading head is carried by two parallel rods (1,101, 1,102) which are parallel to the main faces of the discs, and in that one of these rods (1,102) is rotated ($\omega'$) by a rotating step motor and comprises a helical flight driving the housing in a direction parallel to the rods.

7. Device according to any of claims 1 and 2, characterized in that the housing of each recording/reading head is carried by two parallel rods and in that a belt driven by a rotating step motor and secured at one point of the housing slidingly drives the latter along the two parallel rods.

8. Optical storage system comprising at least two discs organized as a stack (10 to 13), characterized in that it comprises a device according to any of claims 1 to 7.

9. Optical storage system comprising at least two discs organized as a stack (10 to 13), characterized in that it comprises at least two devices according to any of claims 1 to 7 ; the recording/reading heads (40') of a first device being located in a first plane ($p_1$) which is perpendicular to the main faces of the discs, and the recording/reading heads (41') of at least one second device being located in a second plane ($p_2$) different from the first and being also perpendicular to the main faces of the discs.

**Ansprüche**

1. Optische Aufzeichnungs/Lesevorrichtung für Informationsträger, wobei die Informationsträger wenigstens zwei Platten (10, 11, 12) enthalten, die als Stapel organisiert und um eine gemeinsame Achse ($\Delta$) in Drehung ($\omega$) versetzt sind, mit einer beweglichen Einheit, die wenigstens einen Aufzeichnungs/Lesekopf (40, 41, 42) umfaßt, welcher (40) zwischen zwei aufeinanderfolgende Platten (10, 11) des Stapels eingefügt ist und einer der gegenüberliegenden Flächen (101 bzw. 110) der beiden aufeinanderfolgenden Platten (10, 11) zugeordnet ist, und mit einer Gruppe von Lichtsendern und -empfängern ($ER_{10}$, $ER_{20}$, $ER_{11}$, $ER_{21}$) ; wobei die Vorrichtung dadurch gekennzeichnet ist, daß jeder Aufzeichnungs/Lesekopf zwei einander entgegengesetzt angeordnete Objektive ($OB_1$, $OB_2$), die eine gemeinsame optische Achse aufweisen und senkrecht zu den Hauptflächen der beiden aufeinanderfolgenden Platten sind, ein erstes Nachführungsorgan zur geregelten Positionsnachführung in einer zu den optischen Achsen parallelen Richtung und mit wenigstens einer Magnetspule ($B_{10}$), die fest mit einem der beiden Fokussierobjektive ($OB_1$) verbunden ist, und ein zweites Nachführungsorgan zur geregelten Positionsnachführung in derselben Richtung umfaßt, welches wenigstens eine Magnetspule ($B_{20}$) enthält, die mit dem anderen Fokussierobjektiv ($OB_2$) fest verbunden ist, und daß jeder Aufzeichnungs/Lesekopf die Form eines Gehäuses aufweist, welches an seinen Enden eine Gruppe von Teilen (401, 411, 409 bzw. 410, 412, 402) aus magnetischem Material aufweist, welche einen Magnetkreis für die Magnetspulen bilden, und welches von einem zentralen Kanal durchbohrt ist, in welchem eines der Objektive ($OB_1$ bzw. $OB_2$) längs einer zu seiner optischen Achse parallelen Richtung bewegt ist, sowie einen Zwischenkörper (413) aufweist, der von einem Kanal durchbohrt ist, in dessen Wandungen zwei Fenster (418) angebracht sind, die in das Innere des Kanals Lichtbündel ($f_{10}$, $f_{20}$) eindringen lassen, welche von zwei Lichtsendern ($ER_{10}$, $ER_{20}$) ausgehen, von denen jeder einem der beiden Fokussierobjektive ($OB_1$, $OB_2$) zugeordnet ist, wobei in diesem Kanal ein einziger Planspiegel (416) angeordnet ist, der auf seinen beiden Hauptflächen reflektiert und einen Winkel von $\pi/4$ radian mit der Richtung der optischen Achsen bildet, um jedes der ankommenden Bündel ($f_{10}$ bzw. $f_{20}$) zu einem der beiden Fokussierobjektive ($OB_1$ bzw. $OB_2$) zu reflektieren.

2. Optische Aufzeichnungs/Lesevorrichtung für Informationsträger, die wenigstens zwei Platten (10, 11, 12) enthalten, welche als Stapel organisiert und um eine gemeinsame Achse ($\Delta$) in Drehung ($\omega$) versetzt sind, mit einer beweglichen Einheit, welche wenigstens einen Aufzeichnungs/Lesekopf (40, 41, 42) aufweist, wel-

cher (40) zwischen zwei aufeinanderfolgende Platten (10, 11) des Stapels eingefügt ist und einer der gegenüberliegenden Flächen (101 bzw. 110) von zwei aufeinanderfolgenden Platten (10, 11) zugeordnet ist, und mit einer Gruppe von Lichtsendern und -empfängern ($ER_{10}$, $ER_{20}$, $ER_{11}$, $ER_{21}$) ; wobei die Vorrichtung dadurch gekennzeichnet ist, daß jeder Aufzeichnungs/ Lesekopf zwei einander entgegengesetzt angeordnete Objektive ($OB_1$, $OB_2$), deren optische Achsen zusammenfallen und senkrecht zu den Hauptflächen der beiden aufeinanderfolgenden Platten sind, und ein einziges Nachführungsorgan zur geregelten Positionsnachführung in einer Richtung enthält, die parallel zu den optischen Achsen der beiden Fokussierobjektive ($OB_1$, $OB_2$) ist, welche durch einen gemeinsamen Träger (420) fest miteinander verbunden sind und wenigstens eine Magnetspule ($OB_{12}$) umfassen, und daß jeder Aufzeichnungs/Lesekopf die Form eines Gehäuses aufweist, das an einem seiner Enden eine einzige Gruppe von Teilen aus Magnetmaterial (401, 411, 409) aufweist, die einen Magnetkreis für die Magnetspule bilden, und welches von einem zentralen Kanal durchbohrt ist, in dem der Träger (420) der Fokussierobjektive ($OB_1$, $OB_2$) in einer zu den optischen Achsen parallelen Richtung verschoben wird, sowie einen Hauptkörper (413') aufweist, der ebenfalls von einem Kanal (415) durchbohrt ist, in dessen Wandungen ein erstes Fensterpaar (418, 419) angebracht ist, welches in den Innenraum des Kanals Lichtbündel ($f_{10}$, $f_{20}$) eindringen läßt, die von zwei Lichtsendern ($ER_{10}$, $ER_{20}$) ausgehen, die den beiden Fokussierobjektiven ($OB_1$, $OB_2$) zugeordnet sind ; wobei der gemeinsame Träger (420) ebenfalls einen zentralen Kanal umfaßt, in dessen Wandungen ein zweites Fensterpaar (421, 422) gegenüber den Fenstern des ersten Paares und mit in einer Richtung parallel zu den optischen Achsen gestreckten Form angebracht ist, sowie ein drittes Fensterpaar (423) angebracht ist, deren Form ebenfalls in dieser Richtung gestreckt ist und welche den Durchgang von Befestigungsachsen (417) eines einzigen Planspiegels (416) gestatten, der auf seinen beiden Hauptflächen reflektiert und einen Winkel von $\pi/4$ radian mit der Richtung der optischen Achsen bildet, um jedes der ankommenden Bündel ($f_{10}$ bzw. $f_{20}$) zu einem der Fokussierobjektive ($OB_1$ bzw. $OB_2$) zu reflektieren ; wobei der einzige Planspiegel (416) durch die Achsen (417) an der Innenwandung des in dem Hauptkörper (413') angebrachten Kanals (415) befestigt ist.

3. Vorrichtung nach Anspruch 1 oder 2, dadurch gekennzeichnet, daß die Lichtsender stigmatische optische Kollimatormittel umfassen, so daß zueinander parallele Lichtstrahlenbündel ($f_{10}$, $f_{20}$, $f_{11}$, $f_{21}$) erzeugt werden, die zu den Hauptflächen der Platten parallel sind, wobei jedes Objektiv einem Lichtsender und einem entsprechenden Lichtempfänger zugeordnet ist.

4. Vorrichtung nach Anspruch 3, in welcher ferner auf den Platten optisch aufgezeichnet oder ausgelesen werden kann durch Reflexion des Bündels, welches durch die Fokussierobjektive ($OB_1$, $OB_2$) auf eine der Plattenflächen (101, 110), welche die Informationen trägt, fokussiert wird ; wobei die Vorrichtung dadurch gekennzeichnet ist, daß jedes Paar von Lichtsendern und -empfängern, das einem der Objektive ($OB_1$, $OB_2$) jedes Aufzeichnungs/Lesekopfes zugeordnet ist, die Form eines einzigen Gehäuses ($ER_{10}$, $ER_{20}$) aufweist und daß jedes Gehäuse eine Halbleiterlaserquelle ($L_A$), optoelektronische Detektionsmittel ($D_B$) und einen lichtbrechenden optischen Block umfaßt, der durch eine erste ebene Fläche und eine konvexe Fläche sphärischer Form begrenzt ist, wobei einer der Weierstrass'schen Punkte (A) des durch die konvexe Fläche gebildeten Diopters auf der ebenen Fläche liegt, welche senkrecht zu der Geraden ist, die diesen Weierstrass'schen Punkt mit dem Mittelpunkt der sphärischen Fläche verbindet, wobei die Quelle ($L_A$) in der Nähe dieses Punktes (A) angeordnet ist ; und daß die stigmatischen Kollimatormittel (93) auf dem Weg des Laserbündels (f) außerhalb des optischen Blockes angeordnet sind und das Bündel parallel machen.

5. Vorrichtung nach Anspruch 1 oder 2, dadurch gekennzeichnet, daß die bewegliche Einheit durch einen Linear-Schrittmotor (6) angetrieben wird.

6. Vorrichtung nach Anspruch 1 oder 2, dadurch gekennzeichnet, daß das Gehäuse (1 100) jedes Aufzeichnungs/Lesekopfes auf zwei Stangen (1 101, 1 102) ruht, die zueinander und zu den Hauptflächen der Platten parallel sind, und daß eine dieser Stangen (1 102) durch einen drehend arbeitenden Schrittmotor in Drehung ($\omega'$) versetzt wird und einen Schraubengewindegang aufweist, durch den das Gehäuse in einer zu den Stangen parallelen Richtung angetrieben wird.

7. Vorrichtung nach Anspruch 1 oder 2, dadurch gekennzeichnet, daß das Gehäuse jedes Aufzeichnungs/Lesekopfes auf zwei parallelen Stangen ruht und daß ein Riemen, der von einem drehend arbeitenden Schrittmotor angetrieben wird und an einem Punkt des Gehäuses befestigt ist, dieses Gehäuse entlang den beiden parallelen Stangen verschiebt.

8. Optisches Speichersystem mit wenigstens zwei als Stapel organisierten Platten (10 bis 13), dadurch gekennzeichnet, daß es eine Vorrichtung nach einem der Ansprüche 1 bis 7 umfaßt.

9. Optisches Speichersystem, welches wenigstens zwei zu einem Stapel organisierte Platten (10 bis 13) umfaßt, dadurch gekennzeichnet, daß es wenigstens zwei Vorrichtungen nach einem der Ansprüche 1 bis 7 umfaßt ; wobei die Aufzeichnungs/Leseköpfe (40') einer ersten Vorrichtung in einer ersten Ebene ($p_1$) angeordnet sind, die senkrecht zu den Hauptflächen der Platten ist, und die Aufzeichnungs/Leseköpfe (41') wenigstens einer zweiten Vorrichtung in einer zweiten Ebene ($p_2$) angeordnet sind, die verschieden von der ersten und ebenfalls senkrecht zu den Hauptflächen der Platten ist.

# FIG.1

# FIG. 2

FIG.3

# FIG. 4

# FIG.5

# FIG.6

# FIG.9

# FIG. 7

# FIG. 8

**FIG.10**

# FIG.11

# FIG.12